# EUROPEAN PATENT SPECIFICATION

(11) **EP 1 697 156 B1**
(45) Date of publication and mention of the grant of the patent: **15.08.2007**
(21) Application number: 04801417.9
(22) Date of filing: 20.12.2004
(51) Int. Cl.: B60J 10/00

(54) **SEALING, TRIMMING OR FINISHING STRIPS**
DICHTUNGS-, EINFASS ODER ZIERLEISTEN
BANDES D'ETANCHEITE, DE GARNISSAGE OU DE FINITION

(30) Priority: 23.12.2003 GB 0329888
(43) Date of publication of application: 06.09.2006
(73) Proprietor: GDX North America Inc., Dover Delaware 19901 (US)
(72) Inventor: DUMKE, Lothar, 41179 Moenchengladbach (DE); TODT, Bernd, 22143 Hamburg (DE)
(74) Representative: Foster, Mark Charles
(86) International application number: PCT/IB2004/004222
(87) International publication number: WO 2005/063519

(56) References cited:
- EP-A- 0 434 210
- EP-A- 0 613 800
- EP-A- 0 622 261
- EP-A- 1 138 538
- WO-A-01/74616
- US-A- 2 263 806
- US-A- 6 158 171
- US-B1- 6 442 902

## Description

### Technical Field

The invention relates to sealing, trimming or finishing strips to be used for carrying out sealing, trimming or finishing functions in motor vehicle bodies.

### Disclosure of the Invention

According to the invention, there is provided a sealing, trimming or finishing strip comprising a longitudinally extending sealing part defining a longitudinal hollow interior which becomes partially compressed in use, the hollow interior of the sealing part being provided with means for controlling the compression of the sealing part, the compression controlling means comprising an interior wall spanning the hollow of the sealing part and : thereby defining first and second longitudinally extending hollows and including a portion for controlling said compression having at least one abutment surface for abutting an internal surface of said hollow interior when relative movement between said internal surface and said abutment surface occurs in use in response to compression of the sealing part, wherein said portion has a cross-section that is:
- relatively large,
- elliptical or bulbous, and
- solid, cellular or foamed across the entire cross-section.

EP 1 138 538 A describes a strip which corresponds to the state of the art.

The compression controlling means provide a "stop" which prevents or substantially reduces any further compression of the sealing part beyond a desired amount. For example, when a vehicle closure member closes an opening in the vehicle body, a peak compression force may be applied to the sealing part during the closing operation (for example, by a user to ensure that the closure member will be securely latched closed - such as when a car door is slammed shut). This peak force is applied only momentarily, and the compression controlling means limit the amount of compression of the sealing part at this time, whereafter the force applied will be reduced.

### Brief Description of the Drawings

Sealing, trimming or finishing strips embodying the invention, for use in carrying out sealing functions in motor vehicle bodies, will now be described, by way of example only, with reference to the accompanying diagrammatic drawings in which:
Figure 1 is a side elevational view of a vehicle to which the sealing, trimming or finishing strips may be fitted;
Figure 2a is a perspective view of part of a first form of sealing, trimming or finishing strip;
Figure 2b is a perspective view of part of a second form of sealing, trimming or finishing strip;
Figure 2c is a perspective view of part of a third form of sealing, trimming or finishing strip;
Figure 2d is a perspective view of part of a fourth form of sealing, trimming or finishing strip;
Figure 3a is a cross-sectional view, along line I-I of Figure 1, of a sealing, trimming or finishing strip carrying out a sealing function in a vehicle body, in which the vehicle door is exerting normal pressure on the sealing, trimming or finishing strip;
Figure 3b is the cross-sectional view of Figure 3a, in which the vehicle door is exerting a slight over-pressure on the sealing, trimming or finishing strip;
Figure 3c is the cross-sectional view of Figure 3a, in which the vehicle door is exerting a greater over-pressure on the sealing, trimming or finishing strip;
Figure 3d is the cross-sectional view of Figure 3a, in which the vehicle door is exerting a substantial over-pressure on the sealing, trimming or finishing strip;
Figure 4 is a graph showing the force applied (F) to the sealing part of the strip in Figures 2 and 3a-3d plotted against the amount of deformation (d) of the sealing part of the strip;
Figure 5 is a cross-sectional view, along line I-I of Figure 1, of an alternative embodiment of a sealing, trimming or finishing strip;
Figure 6a is a cross-sectional view, along line II-II of Figure 1, of an embodiment of a sealing, trimming or finishing strip carrying out a sealing function on the boot of a motor vehicle body;
Figure 6b is a cross-sectional view of an alternative embodiment of a sealing, trimming or finishing strip carrying out a sealing function on the boot of a vehicle body; and
Figure 7 is a perspective view of part of an alternative configuration of a sealing, trimming or finishing strip of Figure 2.

In the figures like elements are generally designated with the same reference numeral.

### Modes for Carrying out the Invention

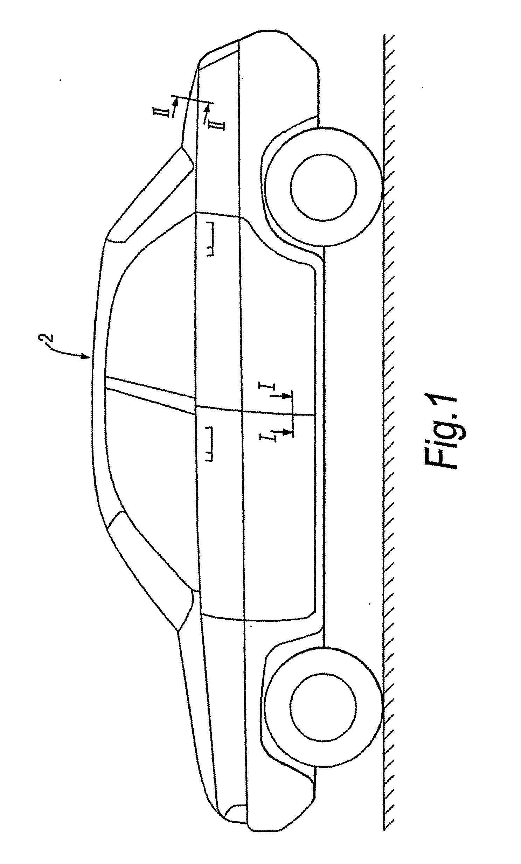

Figure 1 shows a motor vehicle 2. A sealing, trimming or finishing strip as described hereinafter could be provided to the motor vehicle door region or the vehicle boot region to provide a weather-tight seal, or to any other region where a closure member closes an opening in the body of the vehicle 2.

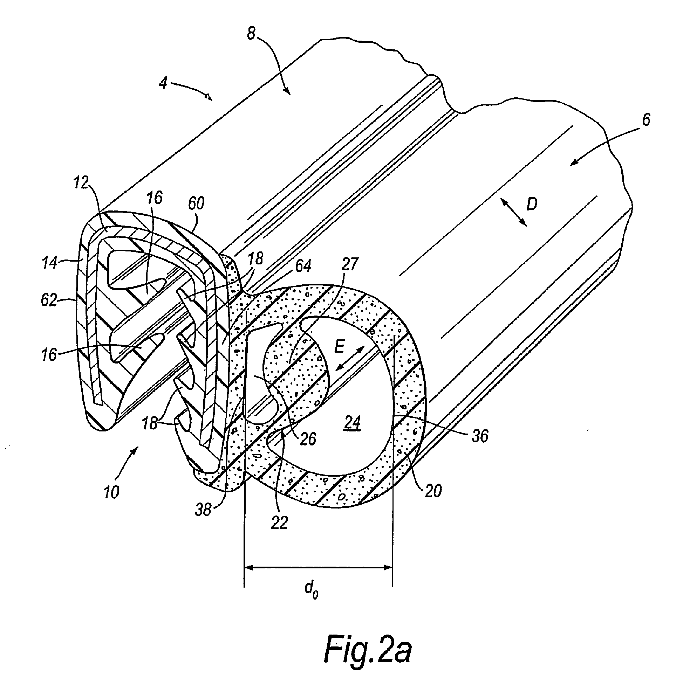

One form of the sealing, trimming or finishing strip 4 is shown in Figure 2a. Such a sealing, trimming or finishing strip 4 could be applied to a motor vehicle door frame (i.e. the part of the vehicle body against which the door is closed). The strip 4 comprises a sealing part 6 and a mounting part 8.

The mounting part 8 is preferably formed by extrusion, although it could be formed by moulding or any other suitable technique.

The mounting part 8 is in the form of a longitudinal channel 10 having a base 60 from which opposite, generally parallel side walls 62,64 extend. In use, the mounting part 8 is embracingly clamped to the frame surrounding the motor vehicle door opening in the body. More specifically, the frame surrounding of the door opening normally comprises a flange where the inner and outer body panels are welded together.

The mounting portion 8 comprises a reinforcing core or carrier 12 such as made of resilient metal or other resilient and relatively rigid material, which is embedded in the flexible material 14 of the mounting part 8, such as rubber or plastics material - for example TPE or EPDM. For example, the carrier 12 may be made of metal and in the form of (inverted) U-shaped elements arranged side-by-side to define the channel 10 and connected together by integral short connecting links or disconnected from each other. Other forms of carrier are, of course, possible. The carrier may be made of wire looped to and fro, and may be incorporated in the material 14 using a cross-head extruder.

The carrier need not be made of metal, for example a flexible but substantially non-extensible tape may be incorporated into the material 14.

The material 14 is formed to define integral gripping lips 16 and 18 positioned on the opposite inside facing walls 62,64 of the channel 10. The lips 16, 18 make contact with the opposite faces of the flange and increase the frictional gripping of the mounting part 8. Advantageously, the material of the lips 16, 18 is arranged to be softer than the remainder of the extruded material 14 to increase the frictional grip of the lips 16, 18 against the flange.

The sealing part 6 is of generally hollow tubular form and may be co-extruded with the mounting part 8. However, it is not necessary for the sealing part 6 to be co-extruded with the mounting part 8. Instead, the sealing part 6 may be made separately, by extrusion or moulding (or other suitable method) from appropriate material(s), and may then be secured to the mounting part 8 by adhesive, moulding, welding or any other suitable technique.

The sealing part 6 extends from wall 64 of the mounting part 8.

The extruded material 20 of the sealing part 6 may be foamed or cellular material. Such material is more readily compressible than the non-foamed or solid material of the mounting part 8. The foamed or cellular material 20 may enhance sealing and allow the sealing part 6 to provide effective sealing even when there are irregularities or discontinuities in the surface which the sealing part 6 abuts or in the flange on which the mounting part is mounted. Of course, it should be appreciated that the extruded material 20 may be partly or wholly formed of non-foamed or solid material, although such material will preferably be more easily compressible than the material 14 of the mounting part 8.

In this example, the extruded material 20 of the sealing part 6 comprises an interior wall 22 defining within the void of the sealing part 6 a first longitudinally extending hollow 24 and a second longitudinally extending hollow 26. The sealing part 6 thus comprises a hollow interior made up of first and second longitudinally extending hollows 24, 26 which are separated by the interior wall 22 formed from the extruded material 20. The interior wall 22 has a portion 27 of bulbous cross-section and an inherent resilience, enabling the interior wall to act as a "stopper" when excessive pressure is exerted on the sealing part 6, in a manner to be described hereinafter. The wall 22 and bulbous portion 27 are formed from the same material (having the same hardness) as the rest of the extruded material 20.

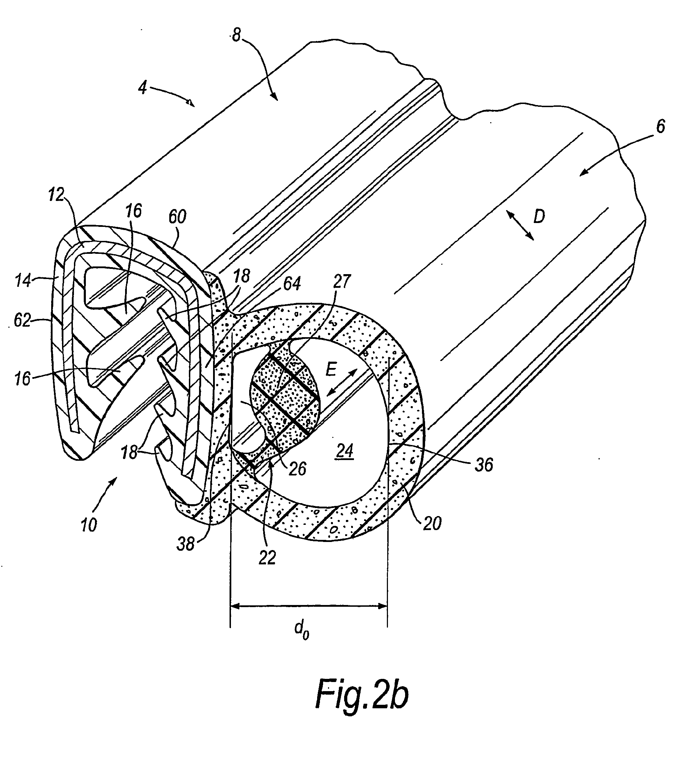

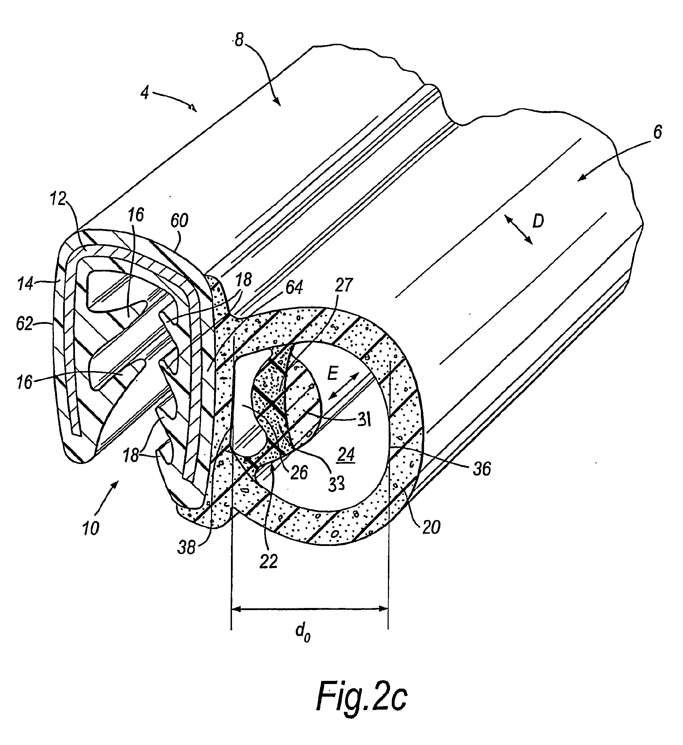

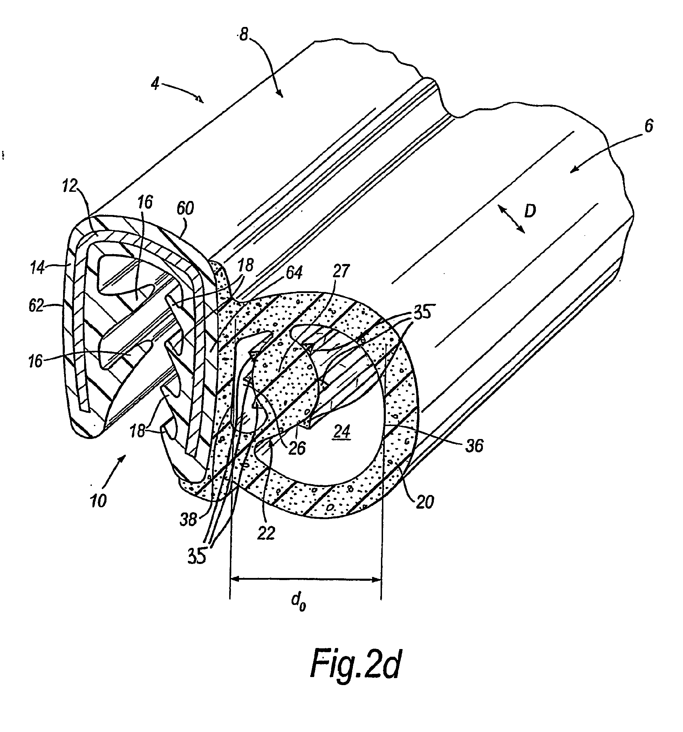

Second, third and fourth forms of the sealing, trimming or finishing strip 4 are shown in Figures 2b, 2c and 2d respectively. These alternative forms are substantially of the form of the sealing, trimming or finishing strip described above with reference to Figure 2a, except for the form of the interior wall 22 defining within the void of the sealing part 6 the first longitudinally extending hollow 24 and the second longitudinally extending hollow 26.

In the second form of the sealing, trimming or finishing strip 4, shown in Figure 2b, the interior wall 22 is not formed of material having the same properties as the material 20 of the sealing part 6. The material 29 of the interior wall 22 may in this case be harder or softer than the material 20 of the interior wall of the first form of sealing, trimming or finishing strip 4. In this case, the interior 22 may be co-extruded with the sealing part 6 or may be made separately, by extrusion or moulding (or other suitable method) from appropriate material(s), and then secured to the sealing part 6 by adhesive, moulding, welding or any other suitable technique.

In the third form of the sealing, trimming or finishing strip 4, shown in Figure 2c, the interior wall 22 is again not formed of material having the same properties as the material 20 as the sealing part 6. In this form, the interior wall 22 comprises two portions 31, 33 which are harder than the material 20 of the interior wall of the first form of sealing, trimming or finishing strip 4. In the embodiment shown in Figure 2c, the first portion 31 (which comprises the part of the bulbous cross-section portion 27 facing the first longitudinally extending hollow 24) is harder than the second portion 33 (which comprises the part of the bulbous cross-section portion 27 facing the second longitudinally extending hollow 26 and the portion of the interior wall 22 which joins the sealing part 6), thereby further enhancing the resilience of the bulbous cross-section portion 27 and its ability to act as a "stopper" when excessive pressure is exerted on the sealing part 6. Again, the interior wall 22 may be co-extruded with the sealing part 6 or may be made separately, by extrusion or moulding (or other suitable method) from appropriate material(s), and then secured to the sealing part 6 by adhesive, moulding, welding or any other suitable technique. Further, the first and second materials 31, 33 comprising the interior wall 22 may be co-extruded or may be made separately and then secured together using a suitable technique. The first portion 31 may be softer than the second portion 33.

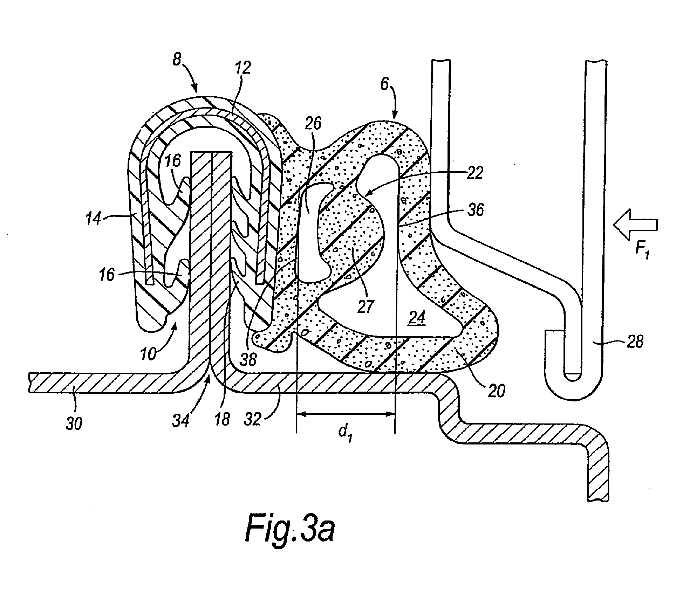

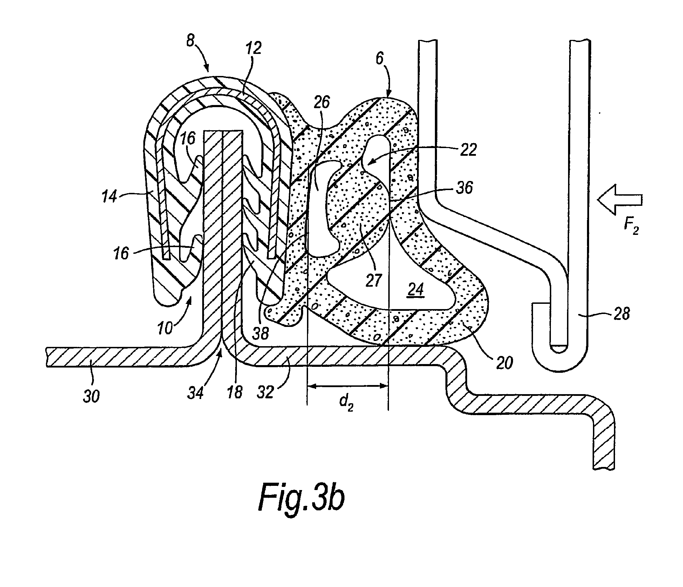

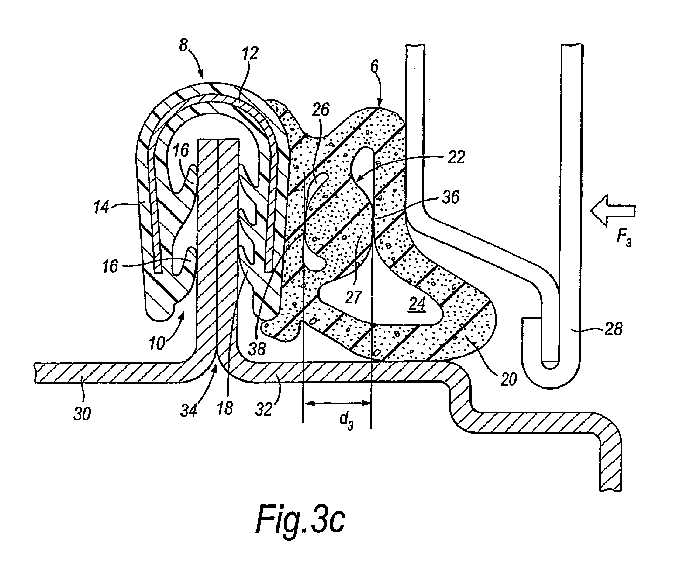

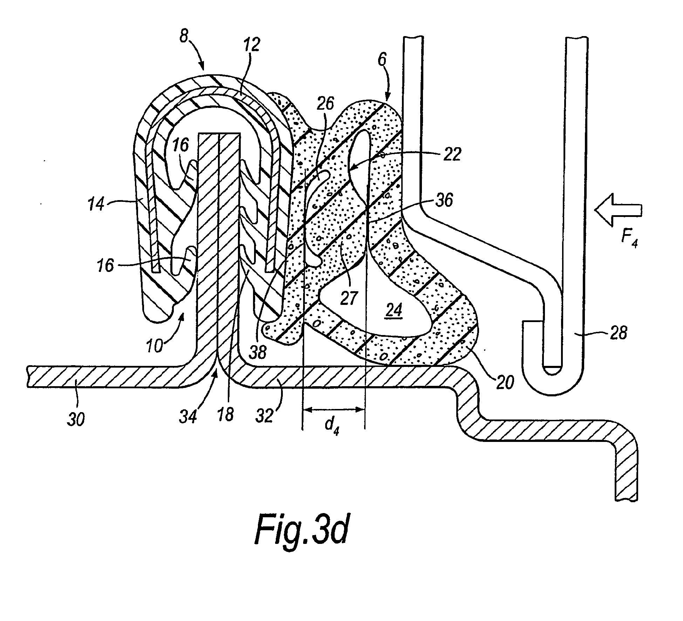

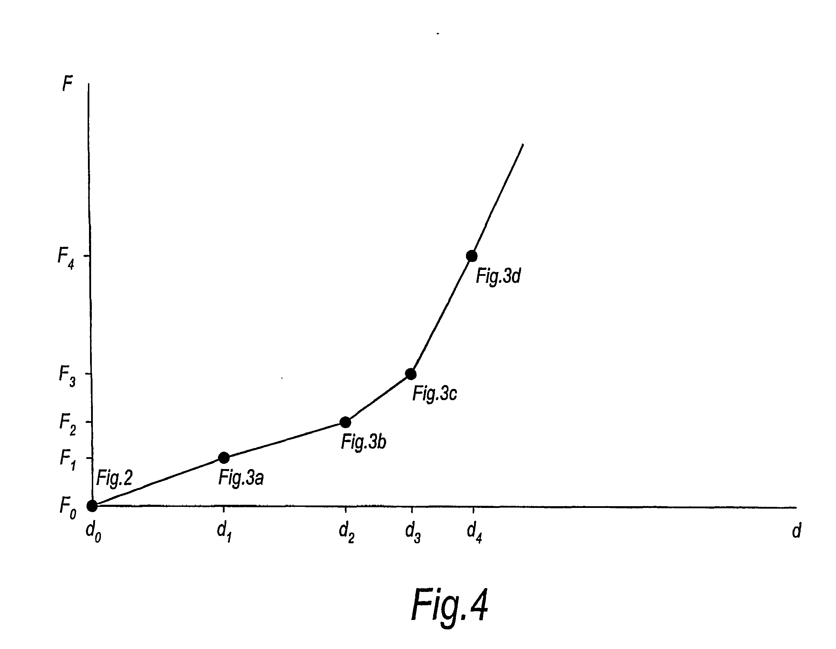

In the fourth form of the sealing, trimming or finishing strip 4, shown in Figure 2d, the interior wall 22 is formed of the same material 20 (having the same hardness) as the sealing part 6. In this form, the bulbous cross-section portion 27 comprises a plurality of spaced apart protrusions or ridges 35 on the surfaces facing the first and second longitudinally extending hollows 24, 26. The protrusions 35 extend longitudinally along the length of the interior wall 22. The protrusions 35 may reduce the noise generated when the closure member is closed. The protrusions 35 may also reduce the tendency for the bulb 27 to stick to the outer internal surface 36 and/or the inner internal surface 38 of the sealing part 6 when the closure member remains closed for an extended period of time. The protrusions may act to control the outer internal surface 36 and inner internal surface 38 of the sealing part 6 as the motor vehicle door 28 is closed (which will be described hereinafter with reference to Figures 3a, 3b, 3c and 3d), thereby enhancing the ability of the bulbous cross-section portion 27 to act as a "stopper" when excessive pressure is exerted on the sealing part 6.

In use, the mounting part 8 mounts the sealing, trimming or finishing strip on the motor vehicle door frame, so that the sealing part 6 extends around the motor vehicle door opening, on the outside of the motor vehicle body. The closing door thus partially compresses the sealing part 6 which thereby provides a weather-tight seal.

Figures 3a, 3b, 3c and 3d show cross-sectional views of the sealing, trimming or finishing strip of Figure 2 along the line I-I of Figure 1 in increasing states of compression as the motor vehicle door 28 is closed. In these examples, the mounting part 8 is mounted to the frame of the door opening defined by an inner body panel 30 and an outer body panel 32 at the point where the inner and outer body panels 30, 32 are welded together to form a flange 34.

Figure 3a defines the normal working condition, wherein the motor vehicle door 28 is exerting a normal pressure or force F₁, on the sealing part 6 of the sealing, trimming or finishing strip. The normal working condition is the condition when the door 28 is closed with no additional pressure being exerted on the door 28. In this condition, the sealing part 6 is slightly deformed and resiliently presses against the door 28 prevent the ingress of moisture and dirt and to minimise wind noise within the vehicle cabin.

Figure 3b shows the situation where the door 28 is exerting a slight over-pressure or force F₂ on the sealing part 6 of the sealing, trimming or finishing strip. The force F₂ increases the deformation of the sealing part 6 which leads to a reduction of the distance between the outer surface 36 of the sealing part 6 and the interior wall 22 defining the first longitudinally extending hollow 24. In Figure 3b, the outer internal surface 36 of the sealing part 6 and the interior wall 22 are in fact in contact. However, the force F₂ is not substantial enough to cause deformation of the interior wall 22.

Figure 3c shows the situation where the door 28 is exerting a greater over-pressure or force F₃ on the sealing part 6. The force F₃ is in excess of the force F₂. The force F₃ causes deformation of the sealing part 6 to such an extent that the interior wall 22 is also deformed and the distance between the interior wall 22 and the inner internal surface 38 of the sealing part 6 defining the second longitudinally extending hollow 26 is also reduced. In Figure 3c, the interior wall 22 and the inner surface 38 of the sealing part 6 are in contact.

Figure 3d shows the situation where the door 28 is exerting a substantial over-pressure or force F₄ on the sealing part 6. The force F₄ is in excess of the force F₃. The force F₄ causes further deformation of the sealing part 6. However due to the bulbous cross-section portion 27 and inherent resilience of the interior wall 22, the interior wall 22 acts as a stopper to inhibit any further deformation of the sealing part 6 occurring.

Figures 3a, 3b, 3c and 3d show respective distances d₀, d₁, d₂, d₃ and d₄ measured between the outer internal surface 36 and the inner internal surface 38 of the sealing part 6 at various stages of compression. Figure 4 is a graph showing the force applied (F) to the sealing part 6 of the strip in Figures 3a, 3b, 3c and 3d plotted against the reduction in distance (d) between the surfaces 36 and 38. For example, from this graph it can be seen that a relatively large force is required to cause a relatively small reduction in the distance between the walls 36 and 38 as the door 28 moves from the position shown in Figure 3c to the position shown in Figure 3d. This increase in force/decrease in distance reduction is due to this last phase of movement of the door requiring compression of the bulbous portion 27 itself. The bulbous portion can be seen to be acting as a "stopper" which controls in normal use the minimum distance allowed between the door 28 and the flange 34.

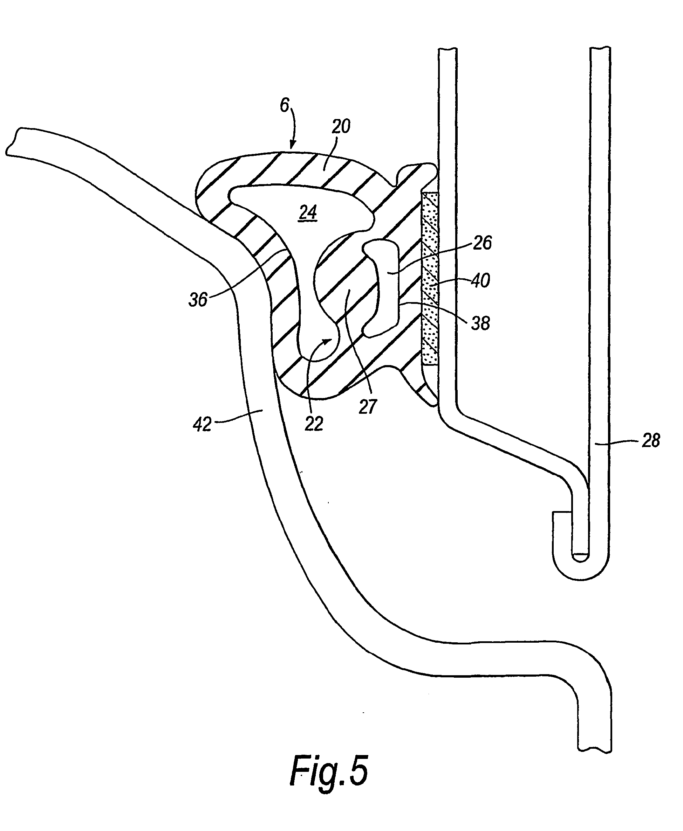

Figure 5 shows an alternative embodiment of a sealing, trimming or finishing strip in cross-section, along the line I-I of Figure 1. In this embodiment the sealing part 6 is not provided with the mounting part 8 for mounting the door on a door frame flange. Instead, the sealing part 6 is secured to the motor vehicle door 28 by adhesive 40, and the outer surface 36 of the sealing part 6 contacts the motor vehicle door frame 42 to perform the sealing function. The adhesive 14 may be double sided adhesive tape. The sealing part 6 may alternatively be secured to the door 28 by any other suitable means. For example, a flange could be provided on the door which engages the seal (or a mounting part provided on the seal), or a series of studs and correspondingly configured apertures could be provided in the sealing part 6 and the door 28, respectively, to allow those parts to be secured together.

The pressure is exerted on the sealing part 6 by the motor vehicle door frame 42. Deformation of the sealing part 6 occurs as a consequence of the pressure applied to the door 28 in the same manner as described hereinbefore in relation to Figures 3a to 3d. Again, the interior wall 22 acts as a stopper when substantial pressure is applied to the door 28 due to the bulbous cross-section portion 27 and inherent resilience of the interior wall 22.

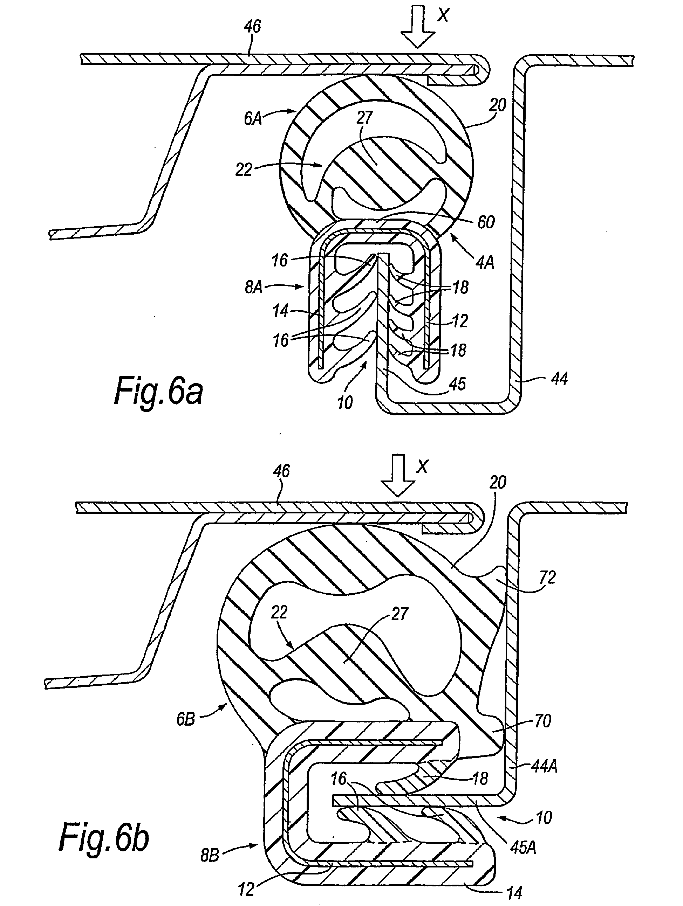

Figures 6a and 6b show cross-sectional views of sealing, trimming or finishing strips, along the line II-II of Figure 1, where the sealing, trimming or finishing strips are carrying out a sealing function on the boot 46 of a motor vehicle.

In Figure 6a, the frame 44 of the opening in the vehicle body has a generally U-shaped cross-section and terminates in a flange 45. The flange 45 extends generally perpendicularly to the abutment surface of the boot 46. The sealing part 6 of a sealing, trimming or finishing strip 4A is mounted on the flange 45.

The strip defines an inverted U-shaped channel 10A defining a mounting part 8A. The mounting part 8A has a similar form and performs a similar function to the mounting part 8 of described above for mounting on the flange 34 of a door frame. However the sealing part 6A is extends from the base 60 of the channel 10. The sealing part 6A comprises an interior wall 22 having a bulbous cross-section portion 27.

The sealing part 6A is compressed in response to varying applied pressure, in a similar manner as described above in relation to the sealing part 6, as the boot 46 is closed against the frame 44 in the direction of arrow X.

In Figure 6b, the frame 44A is generally L-shaped and terminates in a flange 45A.

The flange 45A extends generally parallel to the abutment surface of the boot 46. In this embodiment, the sealing portion 6B extends from the wall 64 of the mounting portion 8 to seal against the abutment surface of the boot 46. The sealing part 6B is provided with additional abutment lips 70,72 which abut against the surface of the frame 44A which extends perpendicularly to the flange 45A to help locate the sealing part 6B.

In both Figures 6a and 6b the bulbous portion 27 of interior wall 22 acts as a stopper when substantial pressure is applied to the boot 46 due to the bulbous cross-section and inherent resilience of the bulbous portion 27 of the interior wall 22.

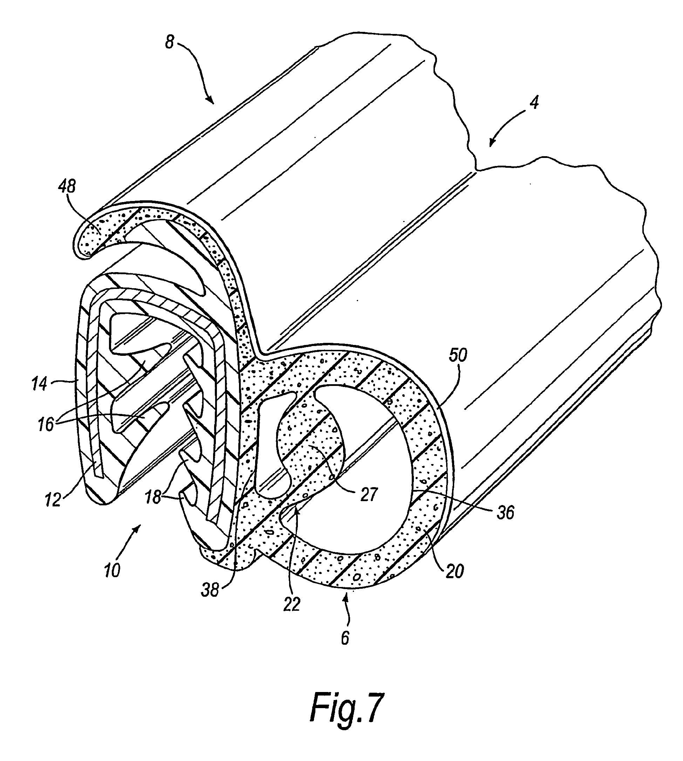

Figure 7 shows an alternative configuration of a sealing, trimming or finishing strip. In this configuration, the materials 14 and 20 of the mounting part 8 and sealing part 6 are formed to define a so-called "cosmetic lip" 48. Such a cosmetic lip 48 is used to cover over, and to help secure, the edge of a trim panel or the like inside the vehicle body. The cosmetic lip 48 is preferably co-extruded with the sealing part 6 and the mounting part 8.

The mounting part 8 and the sealing part 6 may also be provided with a covering layer 50. Such a covering layer may be a fabric layer. The covering layer 50 may provide the strip with a desired appearance (such as a particular colour). The covering layer 50 is advantageously provided to any of the embodiments described herein where the sealing part 6 is formed of foamed or cellular material, the covering layer 50 being a non-foamed or solid material.

In use, the mounting part 8 mounts the sealing part 6 around the frame of an aperture, so that the sealing part 6 extends around an opening (a door opening or a boot opening), on the outside of the vehicle body. The closing door or boot thus partially compresses the sealing portion 6 which thereby provides a weather-tight seal. When mounted in this way, the mouth of the channel 10 will of course face away from the centre of the door or boot opening.

In order to provide good sealing, it is desirable that the material 20 of the sealing part 6 should be very soft and flexible. In this way, it can provide effective sealing even if there are discontinuities or variations in the thickness of the flange and/or the abutment surface of the door or boot. Soft material is also advantageous because it may be of foamed or cellular form, and therefore light in weight. However, it is necessary for the strip 4 to be bent to follow curves or corners in the door or boot frame. When bent in this way, there will be a tendency for the sealing part 6 to become wrinkled at the curves or corners as the strip 4 is bent to follow the curves or corners. The mouth of the channel 10 will be on the outside of the bend. The softer the material of the sealing part 6, the greater the tendency for this to wrinkle at the curves or corners will be. The interior wall 22 may act as a reinforcement to the sealing part 6, and may increase the stiffness of the sealing part 6 in the directions of arrows D (Figure 2) without reducing the effective softness in the direction of arrows E. The increased stiffness in the direction of arrows D reduces or substantially eliminates any tendency of the sealing part 6 to wrinkle at, or "bridge across", bends or curves in the mounting flange. In this way, therefore, it is possible for the sealing portion 6 to be made of substantially softer material because the increased tendency of such very soft material to wrinkle at or bridge across bends or corners is substantially eliminated by the presence of the interior wall 22.

The interior wall 22 may be formed of the same material 20, with the same hardness, as the remainder of the sealing part 6. Alternatively, the interior wall 22 may be formed of material which is harder than the remainder of the sealing part 6. In an alternative arrangement, the sealing part may be provided with a reinforcement (not shown) which is incorporated within the wall 22. The reinforcement may comprise a length of looped wire of generally zig-zag configuration, or could instead be a thin metal sheet. Other forms of reinforcement are possible. Such a reinforcement could be incorporated into the wall 22 by co-extrusion during the extrusion process forming the sealing part 6. For example, reinforcements of the type described in our United Kingdom patent GB 2327451 (the content of which is fully incorporated herein by reference) may be provided in the interior wall 22 described herein.

As an alternative to the bulbous portion 27 being integrally formed with the wall 22, the bulbous portion could be formed integrally with one of the side walls 36,38 of the sealing part - forming a protrusion therefrom. In this embodiment there would only be a single hollow or void within the sealing part.

## Claims

1. A sealing, trimming or finishing strip (4) comprising a longitudinally extending sealing part (6) defining a longitudinal hollow interior which becomes partially compressed in use, the hollow interior of the sealing part being provided with means for controlling the compression of the sealing part, the compression controlling means comprising an interior wall (22) spanning the hollow of the sealing part and : thereby defining first and second longitudinally extending hollows (24, 26) and including a portion (27) for controlling said compression having at least one abutment surface for abutting an internal surface (36) of said hollow interior when relative movement between said internal surface (36) and said abutment surface occurs in use in response to compression of the sealing part (6), wherein said portion (27) has a cross-section that is:
- relatively large,
- elliptical or bulbous, and
- solid, cellular or foamed across the entire cross-section.

2. A strip (4) according to claim 1, including two of said abutment surfaces for abutting spaced apart internal surface portions (36, 38) of said hollow interior.

3. A strip (4) according to claim 1 or 2, in which the or each abutment surface is convex.

4. A strip (4) according to any preceding claim, in which the interior wall (22) comprises a harder material than the material (20) comprising the sealing part (6).

5. A strip (4) according to any one of claims 1 to 4, in which the interior wall (22) comprises a softer material than the material (20) comprising the sealing part (6).

6. A strip (4) according to any one of claims 1 to 5, in which the interior wall (22) comprises two portions (31, 33), the first portion (31) having a first hardness and the second portion (33) having a second hardness, the first and second hardnesses being different.

7. A strip (4) according to claim 6, in which the first portion (31) defines a portion of the interior wall (22) including the abutment surface that faces the first longitudinally extending hollow (24) and is harder than the second portion (33) of the interior wall (22).

8. A strip (4) according to any preceding claim, in which the surface of the interior wall (22) comprises a plurality of longitudinally extending protrusions or ridges (35).

9. A strip (4) according to claim 8, in which a number of the longitudinally extending protrusions or ridges (35) protrude into the first longitudinally extending hollow (24) and a number of the longitudinally extending protrusions protrude into the second longitudinally extending hollow (26).

10. A strip (4) according to any preceding claim, in which the sealing part (6) is carried by a mounting part (8) for mounting the sealing part (6) at a position to seal an opening.

11. A strip (4) according to claim 13, in which the interior wall (22) spans the hollow of the sealing part (6) near to but separated from the mounting part (8).

12. A strip (4) according to claim 10 or 11, in which the mounting part (8) is relatively rigid compared to the sealing part (6).

13. A strip (4) according to claim 10,11 or 12, in which the mounting part (8) comprises a reinforcing core or carrier (12).

14. A strip (4) according to any one of claims 10 to 13, in which the mounting part (8) is channel shaped.

15. A strip (4) according to claim 14, in which the mounting part (8) comprises integral gripping lips (16, 18) positioned on the opposite inside facing walls of the channels (62, 64).

16. A strip (4) according to claim 15, in which the gripping lips (16, 18) are relatively soft compared to the mounting part (8).

17. A strip (4) according to any one of claims 10 to 16, in which the mounting part (8) is made of extruded material (14).

18. A strip (4) according to any preceding claim, in which the sealing part (6) is made of extruded material (20).

19. A strip (4) according to claim 18 when dependent on claim 10, in which the mounting part (8) and the sealing part (6) are co-extruded.

20. A strip (4) according to any preceding claim, in which the strip (4) also comprises a cosmetic lip (48).

21. A strip (4) according to claim 20, in which the cosmetic lip (48) extends from the region where the mounting part (8) and the sealing part (6) meet and covers the mounting part (8).

22. A strip (4) according to any preceding claim, in which at least one of the mounting part (8) and the sealing part (6) are provided with a fabric covering (50).

23. A strip (4) according to any preceding claim, wherein the sealing part (6) comprises cellular or foamed material.

24. A strip (4) according to any preceding claim, wherein the compression controlling means serves to reinforce the hollow interior and resists partial collapse of the hollow interior when longitudinal bending of the strip (4) occurs so as to bend the longitudinal axis which extends along the hollow interior.

## Patentansprüche

1. Dichtungs-, Einfass- oder Zierleiste (4) mit einem sich längs erstreckenden Dichtungsteil (6), das einen sich längs erstreckenden, hohlen Innenraum definiert, der während des Gebrauchs teilweise komprimiert wird, wobei der hohle Innenraum des Dichtungsteils mit Mitteln zum Steuern der Kompression des Dichtungsteils versehen ist, wobei die Kompressionssteuermittel eine Innenwand (22) umfassen. die den Hohlraum des Dichtungsteils abgrenzt und dabei erste und zweite, sich längs erstreckende Hohlräume (24, 26) definiert, und einen Bereich (27) zum Steuern der Kompression mit wenigstens einer Stoßfläche zum Anstoßen an einer Innenfläche (36) des hohlen Innenraums aufweisen, wenn eine Relativbewegung zwischen der Innenfläche (36) und der Stoßfläche während des Gebrauchs als Antwort auf die Kompression des Dichtungsteils (6) auftritt, wobei der Bereich (27) einen Querschnitt aufweist. der:
- relativ groß ist,
- elliptisch oder knollig ist, und
- über den gesamten Querschnitt massiv, zellenförmig oder geschäumt ist.

2. Leiste (4) nach Anspruch 1, die zwei der Stoßflächen zum Anstoßen an beabstandete Innenflächenbereiche (36, 38) des hohlen Innenraums aufweist.

3. Leiste (4) nach Anspruch 1 oder 2, bei der die oder jede Stoßfläche konvex ist.

4. Leiste (4) nach einem der vorhergehenden Ansprüche, bei der die Innenwand (22) ein härteres Material als das Material (20) aufweist, welches das Dichtungsteil (6) umfasst.

5. Leiste (4) nach einem der Ansprüche 1 bis 4, bei der die Innenwand (22) ein weicheres Material als das Material (20) aufweist, welches das Dichtungsteil (6) umfasst.

6. Leiste (4) nach einem der Ansprüche 1 bis 5, bei der die Innenwand (22) zwei Bereiche (31. 33) aufweist, wobei der erste Bereich (31) eine erste Härte und der zweite Bereich (33) eine zweite Härte hat, wobei die erste Härte und die zweite Härte voneinander verschieden sind.

7. Leiste (4) nach Anspruch 6, bei welcher der erste Bereich (31) einen Bereich der Innenwand (22) definiert, welche die Stoßfläche beinhaltet, die zu dem ersten, sich längs erstreckenden Hohlraum (24) weist und härter als der zweite Bereich (33) der Innenwand (22) ist.

8. Leiste (4) nach einem der vorhergehenden Ansprüche, bei der die Fläche der Innenwand (22) mehrere, sich längs erstreckende Vorsprünge oder Kanten (35) aufweist.

9. Leiste (4) nach Anspruch 8, bei der eine Anzahl der sich längs erstreckenden Vorsprünge oder Kanten (35) in den ersten sich längs erstreckenden Hohlraum (24) vorsteht, und eine Anzahl der sich längs erstreckenden Vorsprünge in den zweiten, sich längs erstreckenden Hohlraum (26) vorsteht.

10. Leiste (4) nach einem der vorhergehenden Ansprüche, bei der das Dichtungsteil (6) durch ein Befestigungsteil (8) zum Befestigen des Dichtungsteils (6) an einer Position zum Abdichten einer Öffnung gehalten ist;

11. Leiste (4) nach Anspruch 13, bei der die Innenwand (22) den Hohlraum des Dichtungsteils (6) in der Nähe aber getrennt von dem Befestigungsteil (8) begrenzt.

12. Leiste (4) nach Anspruch 10 oder 11, bei der das Befestigungsteil (8) relativ starr im Vergleich zu dem Dichtungsteil (6) ist.

13. Leiste (4) nach Anspruch 10, 11 oder 12, bei der das Befestigungsteil (8) einen Verstärkungskern oder Träger (12) aufweist,

14. Leiste (4) nach einem der Ansprüche 10 bis 13, bei der das Befestigungsteil (8) kanalförmig ist.

15. Leiste (4) nach Anspruch 14, bei der das Befestigungsteil (8) integrale Greiflippen (16. 18) umfasst, die an den gegenüberliegenden, nach innen weisenden Wänden der Kanäle (62. 64) positioniert sind.

16. Leiste (4) nach Anspruch 15. bei der die Greiflippen (16, 18) relativ weich im Vergleich zu dem Befestigungsteil (8) sind.

17. Leiste (4) nach einem der Ansprüche 10 bis 16, bei der das Befestigungsteil (8) aus einem extrudierten Material (14) hergestellt ist,

18. Leiste (4) nach einem der vorhergehenden Ansprüche, bei der das Dichtungsteil (6) aus einem extrudierten Material (20) hergestellt ist.

19. Leiste (4) nach Anspruch 18, wenn dieser auf Anspruch 10 rückbezogen ist, bei der das Befestigungsteil (8) und das Dichtungsteil (6) koextrudiert sind.

20. Leiste (4) nach einem der vorhergehenden Ansprüche, bei der die Leiste (4) ferner eine kosmetische Lippe (48) umfasst.

21. Leiste (4) nach Anspruch 20, bei der sich die kosmetische Lippe (48) von dem Bereich erstreckt, in dem sich das Befestigungsteil (8) und das Dichtungsteil (6) treffen, und das Befestigungsteil (8) abdeckt.

22. Leiste (4) nach einem der vorhergehenden Ansprüche, bei der das Befestigungsteil (8) und/oder das Dichtungsteil (6) mit einer Gewebeabdeckung (50) versehen ist/sind,

23. Leiste (4) nach einem der vorhergehenden Ansprüche, bei der das Dichtungsteil (6) ein zellenförmiges oder geschäumtes Material aufweist.

24. Leiste (4) nach einem der vorhergehenden Ansprüche, bei der das Kompressionssteuermittel dazu dient, den hohlen Innenraum zu verstärken, und einem teilweisen Zusammenbruch des hohlen Innenraums widersteht, wenn ein Biegen in Längsrichtung des Streifens (4) auftritt, um die Längsachse zu biegen, die sich entlang des hohlen Innenraums erstreckt.

## Revendications

1. Bande d'étanchéité, de garniture ou de finition (4) comprenant une partie d'étanchéité (6) qui s'étend longitudinalement et qui définit un intérieur longitudinal creux qui est partiellement comprimé lors de l'utilisation, l'intérieur creux de la partie d'étanchéité étant muni de moyens permettant de contrôler la compression de la partie d'étanchéité, le moyen de contrôle de la compression comprenant une paroi interne (22) délimitant l'évidement de la partie d'étanchéité et définissant ainsi un premier et un second évidements (24, 26) qui s'étendent longitudinalement et comprenant une portion (27) pour contrôler ladite compression, avec au moins une surface d'appui permettant de s'appuyer sur une surface interne (36) dudit intérieur creux lorsqu'un mouvement relatif a lieu entre ladite surface interne (36) et ladite surface d'appui lors de l'utilisation en réponse à une compression de la partie d'étanchéité (6), ladite portion (27) présentant une section transversale qui est :
- relativement importante,
- elliptique ou renflée, et
- massive, cellulaire ou expansée sur toute la section transversale.

2. Bande (4) selon la revendication 1, comprenant deux desdites surfaces d'appui permettant un appui des portions de surface interne (36, 38), espacées entre elles, dudit intérieur creux.

3. Bande (4) selon la revendication 1 ou 2, dans laquelle la surface d'appui ou chaque surface d'appui est convexe.

4. Bande (4) selon l'une des revendications précédentes, dans laquelle la paroi interne (22) comprend un matériau plus dur que le matériau (20) constituant la partie d'étanchéité (6).

5. Bande (4) selon l'une des revendications 1 à 4, dans laquelle la paroi interne (22) comprend un matériau plus souple que le matériau (20) constituant la partie d'étanchéité (6).

6. Bande (4) selon l'une des revendications 1 à 5, dans laquelle la paroi interne (22) comprend deux portions (31, 33), la première portion (31) ayant une première dureté et la seconde portion (33) ayant une seconde dureté, la première et la seconde dureté étant différentes.

7. Bande (4) selon la revendication 6, dans laquelle la première portion (31) définit une portion de la paroi interne (22) y compris la surface d'appui en face du premier évidement (24) qui s'étend longitudinalement et est plus dur que la seconde portion (33) de la paroi interne (22).

8. Bande (4) selon l'une des revendications précédentes, dans laquelle la surface de la paroi interne (22) comprend une pluralité de saillies ou nervures (35) qui s'étendent longitudinalement.

9. Bande (4) selon la revendication 8, dans laquelle certaines des saillies ou nervures (35) qui s'étendent longitudinalement dépassent dans le premier évidement (24) qui s'étend longitudinalement et certaines des saillies ou nervures (35) qui s'étendent longitudinalement dépassent dans le second évidement (26) qui s'étend longitudinalement.

10. Bande (4) selon l'une des revendications précédentes, dans laquelle la partie d'étanchéité (6) est supportée par une partie de montage (8) permettant de monter la partie d'étanchéité (6) afin d'étanchéifier une ouverture.

11. Bande (4) selon la revendication 13, dans laquelle la paroi interne (22) délimite l'évidement de la partie d'étanchéité (6) à proximité mais séparée de la partie de montage (8).

12. Bande (4) selon la revendication 10 ou 11, dans laquelle la partie de montage (8) est relativement rigide par rapport à la partie d'étanchéité (6).

13. Bande (4) selon la revendication 10, 11 ou 12, dans laquelle la partie de montage (8) comprend un noyau ou un support de renforcement (12).

14. Bande (4) selon l'une des revendications 10 à 13, dans laquelle la partie de montage (8) présente la forme d'un canal.

15. Bande (4) selon la revendication 14, dans laquelle la partie de montage (8) comprend des lèvres de préhension intégrales (16, 18) situées sur les parois opposées orientées vers l'intérieur des canaux (62, 64).

16. Bande (4) selon la revendication 15, dans laquelle les lèvres de préhension (16, 18) sont relativement souples par rapport à la partie de montage (8).

17. Bande (4) selon l'une des revendications 10 à 16, dans laquelle la partie de montage (8) est constituée d'un matériau extrudé (14).

18. Bande (4) selon l'une des revendications précédentes, dans laquelle la partie d'étanchéité (6) est constituée d'un matériau extrudé (20).

19. Bande (4) selon la revendication 18, lorsqu'elle dépend de la revendication 10, dans laquelle la partie de montage (8) et la partie d'étanchéité (6) sont coextrudées.

20. Bande (4) selon l'une des revendications précédentes, dans laquelle la bande (4) comprend également une lèvre esthétique (48).

21. Bande (4) selon la revendication 20, dans laquelle la lèvre esthétique (48) s'étend à partir de la région où la partie de montage (8) et la partie d'étanchéité (6) se rencontrent et elle recouvre la partie de montage (8).

22. Bande (4) selon l'une des revendications précédentes, dans laquelle au moins la partie de montage (8) ou la partie d'étanchéité (6) est munie d'un revêtement de tissu (50).

23. Bande (4) selon l'une des revendications précédentes, dans laquelle la partie d'étanchéité (6) comprend un matériau cellulaire ou expansé.

24. Bande (4) selon l'une des revendications précédentes, dans laquelle le moyen de contrôle de compression sert à renforcer l'intérieur creux et résiste à un effondrement partiel de l'intérieur creux lorsqu'une flexion longitudinale de la bande (4) a lieu de façon à fléchir l'axe longitudinal qui s'étend le long de l'intérieur creux.
